# EUROPEAN PATENT APPLICATION

(11) **EP 2 933 307 A1**
(43) Date of publication of application: **21.10.2015**
(21) Application number: 14290113.1
(22) Date of filing: 17.04.2014
(51) Int. Cl.: C09K 8/473, C04B 28/04, C04B 38/02, C04B 38/10, E21B 36/00

(54) **Methods for cementing wells, using foamed cementing compositions**

(71) Applicant: Services Pétroliers Schlumberger, 75007 Paris (FR); Schlumberger Holdings Limited, Road Town, Tortola 1110 (VG); Schlumberger Technology B.V., 2514 JG The Hague (NL)
(72) Inventor: Bourlon, Arnaud, 92140 Clamart (FR); LE ROY-Delage, Sylvaine, 92140 Clamart (FR)
(74) Representative: Rzaniak, Martin

(57) **Abstract**

A well cementing composition comprises water, an inorganic cement and a gas generating agent. The gas generating agent may contain materials that release hydrogen gas, carbon dioxide gas or nitrogen gas or combinations thereof. Such compositions are useful for cementing across permafrost zones. The initial heat of hydration is lower, decreasing the tendency to melt the permafrost. In addition, the compositions set more quickly, minimizing the chance of freezing before the composition develops strength.

## Description

### BACKGROUND

The statements in this section merely provide background information related to the present disclosure and may not constitute prior art.

This disclosure relates to compositions and methods for improving the performance of energized cement systems for well cementing applications.

Primary cementing is the process of placing cement in the annulus between the casing and the formations exposed to wellbore. Alternatively, cement may be placed in the annular region between two casing strings. The major objective of primary cementing is to provide zonal isolation in wells; for example, to exclude fluids such as water or gas in one zone from oil in another zone in the well, or to protect aquifers from contamination by oil or gas emanating from zones further downhole. To achieve this objective, a hydraulic seal is created between the casing and cement and between the cement and the formations, while at the same time preventing the formation of fluid channels within the cement sheath.

The basic process for accomplishing a primary cementing job employs the two-plug method for pumping and displacement. After the well is drilled to the desired depth, the drillpipe is removed and a larger-diameter casing string is normally run to the bottom of the well. At this time, drilling mud is still in the wellbore. This mud is then displaced, removed from the well and replaced by a cement slurry. To prevent contamination by mud, two plugs isolate the cement slurry as it is pumped down the casing. Sufficient cement slurry is pumped into the casing to fill the annular space from the bottom to at least a level that covers all of the productive zones. In addition to providing zonal isolation, the cement sheath in the annulus protects the casing from corrosion. After slurry placement, the well is shut in for a time sufficient to allow the cement to harden before completion work begins or drilling commences to a deeper horizon.

Remedial cementing consists of two broad categories: squeeze cementing and plug cementing. Squeeze cementing is the process of placing a cement slurry into a wellbore under sufficient hydraulic pressure to partially dehydrate or expel water from the cement slurry, leaving a competent cement that will harden and seal voids. Plug cementing is the placement of a limited volume of cement at a specific location inside the wellbore to create a solid seal or plug. Remedial cementing operations are performed for various reasons: to repair faulty primary cementing jobs, alter formation characteristics, repair casing and abandon wells.

For primary or remedial cementing to be successful, the cement should bond intimately with the surfaces to which it is attached-casing or formation rock. The industry has developed numerous techniques for achieving good bonding. For example, measures are usually taken to ensure that drilling fluid is efficiently removed from the annulus, ensuring that the bonding surfaces are clean and water-wet. Latexes may be added to the cement slurry to improve adhesion of the cement to the casing and formation. Or materials may be added to the cement slurry that cause the set cement to expand after it sets.

Another method for achieving improved bonding is to "energize" the cement slurry by generating gas inside the slurry in situ during placement and the setting phase. Such slurries are compressible and the resulting pressurization may ensure optimal contact between the slurry and the bonding surfaces. The presence of gas in a cement slurry may also improve fluid-loss control and help prevent migration of formation fluids into the annulus before the cement sets.

A thorough description of the primary and remedial cementing, as well as methods for improving bonding, may be found in the following publication. Nelson EB and Guillot D (eds.): Well Cementing-2nd Edition, Houston: Schlumberger (2006*).*

### SUMMARY

The present disclosure provides compositions and methods for improving the performance of energized cement slurries applied in well cementing applications.

In an aspect, embodiments relate to methods for cementing a subterranean well having a borehole penetrating a permafrost zone. A cement slurry is prepared that comprises water, an inorganic cement and a gas generating agent. The gas generating agent may be present at a concentration such that, after a gas is generated in the well, the gas is present in the slurry at a concentration between 1 vol% and 26 vol%. The slurry is placed in the well adjacent to the at least the permafrost zone and allowed to set and form a set cement having a thermal conductivity between 0.3 and 1.3 W/m.K.

In a further aspect, embodiments relate to methods for reducing thermal conductivity of a set cement. A cement slurry is prepared that comprises water, an inorganic cement and a gas generating agent. The gas generating agent may be present at a concentration such that, after a gas is generated, the gas is present in the slurry at a concentration between 1 vol% and 26 vol%. The slurry is allowed to set and form a set cement having a thermal conductivity between 0.3 and 1.3 W/m.K.

### BRIEF DESCRIPTION OF THE DRAWINGS

Fig. 1 is a plot illustrating the effect of foam quality on the thermal conductivity of a set cement.
Fig. 2 shows the effect of an aluminum gas generating agent on the thickening time of a cement slurry.

### DETAILED DESCRIPTION

At the outset, it should be noted that in the development of any such actual embodiment, numerous implementation-specific decisions must be made to achieve the developer's specific goals, such as compliance with system related and business related constraints, which will vary from one implementation to another. Moreover, it will be appreciated that such a development effort might be complex and time consuming but would nevertheless be a routine undertaking for those of ordinary skill in the art having the benefit of this disclosure. In addition, the composition used/disclosed herein can also comprise some components other than those cited. In the summary of the disclosure and this detailed description, each numerical value should be read once as modified by the term "about" (unless already expressly so modified), and then read again as not so modified unless otherwise indicated in context. Also, in the summary of the disclosure and this detailed description, it should be understood that a concentration range listed or described as being useful, suitable, or the like, is intended that any and every concentration within the range, including the end points, is to be considered as having been stated. For example, "a range of from 1 to 10" is to be read as indicating each and every possible number along the continuum between about 1 and about 10. Thus, even if specific data points within the range, or even no data points within the range, are explicitly identified or refer to only a few specific, it is to be understood that Applicants appreciate and understand that any and all data points within the range are to be considered to have been specified, and that Applicants possessed knowledge of the entire range and all points within the range.

In cold weather regions, the temperatures of shallow formations may be below freezing. The depth of such formations may extend to a few hundred feet, and the formations are known in the art as permafrost. When cementing operations are performed in permafrost regions, there are at least two challenges associated with achieving zonal isolation adjacent to the permafrost zones. First, the cement should set and develop strength rapidly; otherwise, the slurry may freeze. Second, the heat of hydration of the cement should not raise the slurry temperature to a level that would melt the permafrost.

After the cement has set and production begins, care should be taken to minimize heat transfer from the warm produced fluids to the permafrost. Thus, a cement sheath with low thermal conductivity would be desirable to prevent melting. Applicants have determined that incorporating a gas generating agent into a cement slurry, and allowing the agent to release gas after cement placement, produces a set cement with a significantly reduced thermal conductivity. If, for example, aluminum powder is the gas generating agent, 0.07% to 1.00% by weight of cement will generate 1 vol% to 26 vol% (or 1% to 26% quality) of hydrogen gas in the cement slurry at 6.9 MPa and 0°C.

In an aspect, embodiments relate to methods for cementing a subterranean well having a borehole penetrating a permafrost zone. A cement slurry is prepared that comprises water, a inorganic cement and a gas generating agent. The gas generating agent may be present at a concentration such that, after a gas is generated in the well, the gas is present in the slurry at a concentration between 1 vol% and 26 vol%. The slurry is placed in the well adjacent to the at least the permafrost zone and allowed to set and form a set cement having a thermal conductivity between 0.3 and 1.3 W/m.K, or between 0.8 and 1.1 W/m.K or between 0.9 and 1.0 W/m.K.

In a further aspect, embodiments relate to methods for reducing thermal conductivity of a set cement. A cement slurry is prepared that comprises water, an inorganic cement and a gas generating agent. The gas generating agent may be present at a concentration such that, after a gas is generated, the gas is present in the slurry at a concentration between 1 vol% and 26 vol%. The slurry is allowed to set and form a set cement having a thermal conductivity between 0.3 and 1.3 W/m.K, or between 0.8 and 1.1 W/m.K or between 0.9 and 1.0 W/m.K.

For both aspects, the inorganic cement may comprise Portland cements, calcium aluminum cements, fly ashes, lime-silica mixtures, zeolites, blast furnace slags, geopolymers or chemically bonded phosphate ceramics or combinations thereof.

For both aspects, the gas generating agent may release hydrogen gas and may comprise aluminum or zinc or a combination thereof. The gas generating agent may release carbon dioxide and may comprise ethylene carbonate or oxalic acid derivatives or combinations thereof. The gas generating agent may release nitrogen gas and may comprise azodicarbonamide, oxy-bis-benzene sulfonylhydrazide, toluenesulfonyl-hydrazide, benzenesulfonyl-hydrazide, toluenesulfonyl-semicarbazide, 5-phenyltetrazole, ammonium nitrite, diazoaminobenzene, 2,2'-asobixisobutyronitrile, 1,1'-azobiscyclohexanecarbonitrile, hydrazine salts or N-N'-dimethyl-N,N'-dinitrosoterephthalamide or combinations thereof. The gas generating may be a combination of the aforementioned materials, thereby releasing more than one type of gas. The gas generating agent may be aluminum metal, present at a concentration between 0.07% and 1.00% by weight of cement (BWOC), or between 0.15% and 0.5% BWOC.

For both aspects, the cement slurry may further comprise a gas stabilizer that comprises an aqueous mixture comprising polyglycols, oxyalkylates and methanol, or coco trimethyl ammonium chloride, or a mixture comprising ammonium fatty alcohol ether sulfate and ethylene glycol monobutyl ether, or combinations thereof. The gas stabilizer may be present at a concentration between 4.45 and 26.7 L/tonne (0.05 and 0.30 gal/sk), or 13.4 and 26.7 L/tonne (0.15 and 0.30 gal/sk), or 17.8 and 26.7 L/tonne (0.20 and 0.30 gal/sk). Note that the abbreviation "sk" refers to a 94-lb sack of cement.

For both aspects, the composition may further comprise other additives including accelerators, retarders, dispersants, fibers, flexible particles, fluid-loss additives, gas-migration additives, extenders, expanding agents, antisettling additives or antifoam additives or weighting agents or combinations thereof. Those skilled in the art will recognize that cenospheres, glass bubbles and the like fall within the category of extenders. Those skilled in the art will also recognize that such hollow spheres should be chosen such that they can withstand the pressures exerted not only by gas generation but also the hydrostatic pressure in the well.

The present disclosure is further illustrated by the following examples.

### EXAMPLES

During the experiments described in the following examples, recommended API testing procedures were followed, using API recommended test equipment. Details about the procedures and equipment may be found in the following publication. Recommended Practice for Testing Well Cements, ANSI/API Recommended Practice 10B-2, 1st Edition, Washington DC: American Petroleum Institute (2005*).*

### EXAMPLE 1

Cement slurries were prepared at foam qualities between 0% and 40%. The base slurry composition from which the foams were prepared was: Class G cement + 8.9 L/tonne gas stabilizer (aqueous mixture of polyglycols, oxyalkylates and methanol). The base slurry density was 1900 kg/m³ (15.8 lbm/gal). An anionic surfactant was used as a foaming agent, at a concentration of 8.9 L/tonne.

The slurries were mixed in a Waring blender, poured into molds and left undisturbed at ambient temperature for 1 day. Such slurries are essentially the same as those that would generate gas in situ in the presence of a gas generating agent. Then, the set samples were removed from the molds and immersed in water at 77°C. After this curing period, the samples were immersed in water at ambient temperature or immersed in water and then dried overnight before being tested.

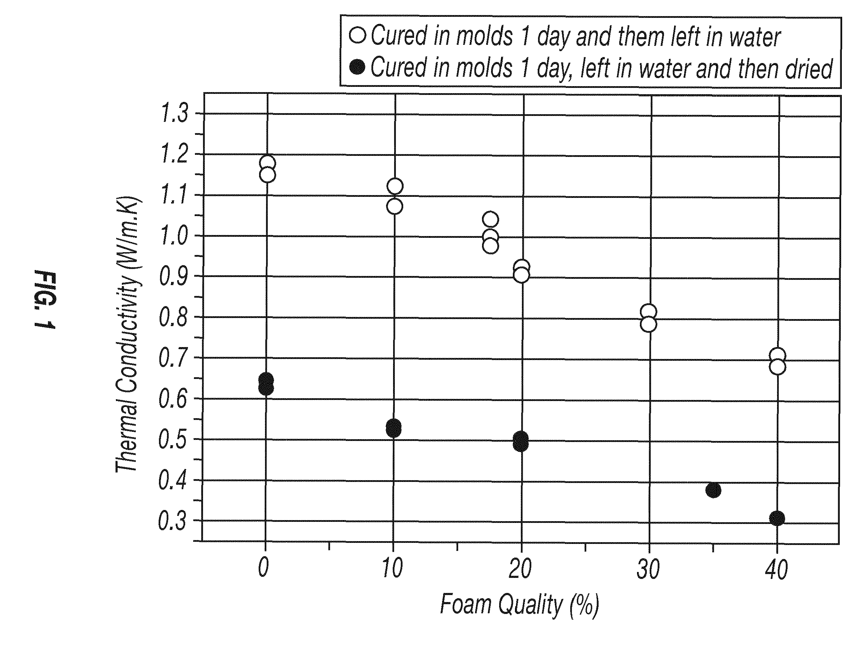

Thermal conductivity measurements were performed on the set cement samples. The results indicated that the thermal conductivity decreased with increasing foam quality (Fig. 1). In addition, dry cement samples had a lower thermal conductivity than their wet equivalents.

### EXAMPLE 2

A base slurry was prepared with the following composition. Class G cement + 4.5 L/tonne polypropylene glycol + 0.60% by weight of cement polymelamine sulfonate + 0.30% by weight of cement lignosulfonate retarder + 0.20% by weight of cement AMPS/acrylamide copolymer, ammonium salt. The slurry density was 1900 kg/m³.

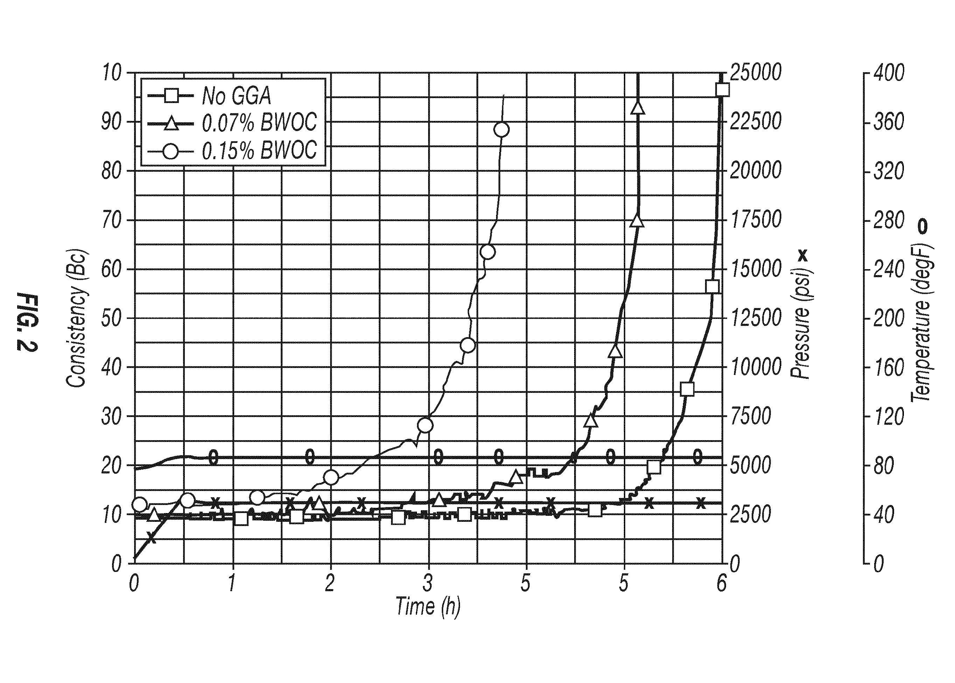

Thickening time tests were performed on a slurry with no aluminum gas generating agent, with 0.07% by weight of cement aluminum powder and 0.15% by weight of cement aluminum powder (Fig. 2). The circulating temperature was 86°F (30°C) and the pressure was 3000 psi (20.7 MPa). The slurry without aluminum gas generating agent had the longest thickening time, and the thickening time decreased with increasing aluminum powder concentration in the slurry.

The examples presented herein are for illustrative purposes and do not limit the scope of the disclosure.

## Claims

1. A method for cementing a subterranean well having a borehole penetrating a permafrost zone, comprising:
(i) preparing a cement slurry comprising water, a inorganic cement and a gas generating agent, wherein the gas generating agent is present at a concentration such that, after a gas is generated in the well, the gas is present in the slurry at a concentration between 1 vol% and 26 vol%;
(ii) placing the slurry in the well adjacent to at least the permafrost zone; and
(iii) allowing the slurry to set and form a set cement having a thermal conductivity; wherein the thermal conductivity of the set cement is between 0.3 and 1.3 W/m.K.

2. The method of claim 1, wherein the gas generating agent releases hydrogen, carbon dioxide or nitrogen gas or a combination thereof.

3. The method of claim 1 or 2, wherein the gas generating agent is aluminum, present at a concentration between 0.07% and 1.00% by weight of cement.

4. The method of any one of claims 1-3, wherein the gas generating agent comprises ethylene carbonate or oxalic acid derivatives or combinations thereof.

5. The method of any one of claims 1-4, wherein the gas generating agent comprises azodicarbonamide, oxy-bis-benzene sulfonylhydrazide, toluenesulfonyl-hydrazide, benzenesulfonyl-hydrazide, toluenesulfonyl-semicarbazide, 5-phenyltetrazole, ammonium nitrite, diazoaminobenzene, 2,2'-asobixisobutyronitrile, 1,1'-azobiscyclohexanecarbonitrile, hydrazine salts or N-N'-dimethyl-N,N'-dinitrosoterephthalamide or combinations thereof.

6. The method of any one of claims 1-5, wherein the cement slurry further comprises a gas stabilizer, the stabilizer comprising an aqueous mixture comprising polyglycols, oxyalkylates and methanol, or coco trimethyl ammonium chloride, or a mixture comprising ammonium fatty alcohol ether sulfate and ethylene glycol monobutyl ether, or combinations thereof.

7. The method of claim 6, wherein the gas stabilizer is present in the slurry at a concentration between 4.45 and 26.7 L/tonne.

8. The method of any one of claims 1-7, wherein the inorganic cement comprises portland cements, calcium aluminum cements, fly ashes, lime-silica mixtures, zeolites, blast furnace slags, geopolymers or chemically bonded phosphate ceramics or combinations thereof.

9. A method for reducing thermal conductivity of a set cement, comprising:
(i) preparing a cement slurry comprising water, a inorganic cement and a gas generating agent, wherein the gas generating agent is present at a concentration such that, after a gas is generated, the gas is present in the slurry at a concentration between 1 vol% and 26 vol%;
(ii) allowing the slurry to set and form the set cement;
wherein the thermal conductivity of the set cement is between 0.3 and 1.3 W/m.K.

10. The method of claim 9, wherein the gas generating agent releases hydrogen, carbon dioxide or nitrogen gas or a combination thereof.

11. The method of claim 9 or 10, wherein the gas generating agent is aluminum, present at a concentration between 0.07% and 1.00% by weight of cement.

12. The method of any one of claims 9-11, wherein the gas generating agent comprises ethylene carbonate or oxalic acid derivatives or combinations thereof.

13. The method of any one of claims 9-12, wherein the gas generating agent comprises azodicarbonamide, oxy-bis-benzene sulfonylhydrazide, toluenesulfonyl-hydrazide, benzenesulfonyl-hydrazide, toluenesulfonyl-semicarbazide, 5-phenyltetrazole, ammonium nitrite, diazoaminobenzene, 2,2'-asobixisobutyronitrile, 1,1'-azobiscyclohexanecarbonitrile, hydrazine salts or N-N'-dimethyl-N,N'-dinitrosoterephthalamide or combinations thereof.

14. The method of any one of claims 9-13, wherein the slurry further comprises a gas stabilizer, the stabilizer comprising an aqueous mixture comprising polyglycols, oxyalkylates and methanol, or coco trimethyl ammonium chloride, or a mixture comprising ammonium fatty alcohol ether sulfate and ethylene glycol monobutyl ether, or combinations thereof.

15. The method of claim 14, wherein the gas stabilizer is present in the slurry at a concentration between 4.45 and 26.7 L/tonne.
